# EUROPÄISCHE PATENTSCHRIFT

(11) **EP 1 273 939 B1**
(45) Veröffentlichungstag und Bekanntmachung des Hinweises auf die Patenterteilung: **14.02.2007**
(21) Anmeldenummer: 02014202.2
(22) Anmeldetag: 26.06.2002
(51) Int. Cl.: G02B 6/25

(54) **Verfahren und Zange zum Schneiden amorpher Lichtwellenleiterkabel**
Method and pliers for cutting of amorph optical fiber cables
Méthode et pince pour couper des câbles à fibres optiques amorphes

(30) Priorität: 04.07.2001 DE 10132413
(43) Veröffentlichungstag der Anmeldung: 08.01.2003
(73) Patentinhaber: Wezag GmbH Werkzeugfabrik, D-35260 Stadtallendorf (DE)
(72) Erfinder: Beetz, Horst, 35260 Stadtallendorf (DE); Battenfeld, Kurt, 35085 Ebsdorfergrund-Wittelsberg (DE)
(74) Vertreter: Rehberg Hüppe + Partner

(56) Entgegenhaltungen:
- EP-A- 0 184 897
- EP-A- 0 829 331
- EP-A- 1 061 387
- DE-A- 19 842 122
- FR-A- 2 561 233
- US-A- 3 344 691
- US-A- 5 003 846

## Beschreibung

Die Erfindung betrifft ein Verfahren zum Schneiden amorpher Lichtwellenleiterkabel, die eine Seele und mindestens einen Mantel aufweisen, indem das Lichtwellenleiterkabel in einem Klemmprofil eines Klemmbackenpaares festgehalten und mit einem Messer durchgeschnitten wird. Es wird auch eine Zange zum Schneiden amorpher Lichtwellenleiterkabel, die eine Seele und mindestens einen Mantel aufweisen, mit einem Zangenantrieb und einem Zangenkopf aufgezeigt, in dem ein ein Klemmprofil zur Aufnahme des Lichtwellenleiterkabels aufweisenden Klemmbackenpaar und ein Messer vorgesehen sind. Das Verfahren und die Zange sind zum Schneiden von Kunststoffkabel, also aus polymerem Werkstoff, so genannter POF-Kabel, besonders geeignet. Die Seele kann aus einem Multifilament, also einem Faserbündel, oder einem Monofilament, also einem einzigen Kunststofffaden, bestehen. Das Lichtwellenleiterkabel kann nur aus einer Seele und einem Mantel, also einer Isolierung, aufgebaut sein. Es ist aber auch möglich, dass das Lichtwellenleiterkabel eine Seele, einen Innenmantel und eine Außenisolierung aufweist, also gleichsam dreischichtig aufgebaut ist. Solche Lichtwellenleiterkabel müssen exakt bruch- und gratfrei sowie genau rechtwinklig zur Längsachse der Seele durchschnitten werden, um beim Aneinanderkuppeln mehrerer Kabelabschnitte die Lichtverluste möglichst gering zu halten und Fehler und Störungen bei der Herstellung von Leiterverbindungen auszuschließen.

Ein Verfahren und eine Zange der eingangs beschriebenen Art sind aus der DE 198 42 122 A1 bekannt. Das zu schneidende Lichtwellenleiterkabel weist in seinem Inneren eine Seele in Form eines Bündels aus Glasfasern auf, an welchem beim Schneiden jegliche Beschädigung ausgeschlossen werden soll. Außerdem besitzt das Lichtwellenleiterkabel einen das Glasfaserbündel umschließenden Innenmantel, der wiederum von einer Außenisolierung umgeben ist. Das Lichtwellenleiterkabel wird in ein Klemmprofil eines Klemmbackenpaares eingelegt und über die Außenisolierung geklemmt gehalten. In einem ersten Schritt erfolgt das Einkerben der Außenisolierung zum Zwecke des Abstreifens des freigelegten Endes der Außenisolierung. Anschließend wird das Lichtwellenleiterkabel einschließlich des Innenmantels und der Außenisolierung genau bzw. exakt durchtrennt, woraufhin gegen die Haltekraft der Kerbmesser die Außenisolierung abgestreift wird und schließlich das Vercrimpen des Kabels mit dem Kabelstecker sachgerecht vollzogen wird. Die Zange weist ein Klemmbackenpaar auf, in welchem ein nach Art und Größe des Lichtwellenleiterkabels bemessenes Klemmprofil ausgebildet ist. Die bewegliche Klemmbacke des Klemmbackenpaares wird über einen Zangenantrieb mit Handhebeln und einem dazwischengeschalteten Kniehebeltrieb beweglich angetrieben, so dass das Lichtwellenleiterkabel mit der Außenisolierung in geschlossenem Zustand der Klemmbacken festgehalten wird. Im Bereich des Zangenkopfes ist ein präzisionsgeschliffenes Rundmesser vorgesehen, welches auf einem Schwenkarm für sich frei drehbar gelagert ist und durch einen Griff in seine Schneidlage verstellt werden kann. Dabei wird das Rundmesser an den das Kabel einseitig haltenden Klemmbacken vorbeigeführt, wobei ein gänzlich glattes Abschneiden des Glasfaserbündels zur Erreichung einer glatten Kontaktfläche erfolgen soll. Das Lichtwellenleiterkabel wird also zwischen den Klemmbacken festgehalten. In diesem Zustand wird das Rundmesser an den Klemmbacken vorbeibewegt, bis die Durchtrennung des Kabels erfolgt ist. Bei dieser bekannten Zange befindet sich das Lichtwellenleiterkabel während der Bearbeitung in Ruhe, während sowohl die dem Einkerben der Außenisolierung dienenden Elemente als auch nachfolgend das Rundmesser relativ zu dem in Ruhe befindlichen Kabel bewegt werden. Die Anordnung mehrere Wirkstationen in Zuordnung zu dem Klemmbackenpaar erfordert eine gewisse Baugröße und einen gewissen axialen Abstand der Wirkstellen von dem Klemmbackenpaar. Hierdurch besteht die Gefahr, dass das Lichtwellenleiterkabel nicht genau rechtwinklig durchtrennt wird und auch beim Einkerben der Außenisolierung Beschädigungen des Innenmantels auftreten können.

Aus der EP 1 061 387 A2 ist ein System und eine Vorrichtung zum Schneiden amorpher Lichtwellenleiterkabel bekannt, bei denen zur Vermeidung von Einrissen in der Schnittfläche das Lichtwellenleiterkabel an zwei beabstandeten Stellen mit je einem Klemmbackenpaar festgehalten, unter axialen Druck gesetzt und mit einem dazu relativ bewegten Messer durchgeschnitten wird. Die Klemmbackenpaare werden aufeinander zu bewegt oder durch Beseitigung einer Biegeschleife axial zusammengedrückt. Statt des axial wirkenden Druckes kann das Lichtwellenleiterkabel auch eingekerbt und durch axialen Zug zerrissen werden.

Aus der US-A-3,344,691 ist eine Abisolierzange bekannt, die einen Zangenkopf aufweist, der symmetrisch zu einer Mittelebene ausgebildet ist. Die Zange weist einen Zangenantrieb in Form zweier um einen Bolzen schwenkbarer Handhebel auf. Über eine Kurvenbahn und einen Nocken wird die relative Schwenkbewegung der Handhebel auf Klemmbacken übertragen, die in die Isolierung des Kabels einschneiden. Aus der EP 0 829 331 A2 ist eine Zange zum Schneiden von Lichtwellenleiterkabel bekannt, die einen Zangenantrieb in Form zweier um einen gemeinsamen Bolzen verschwenkbarer Handhebel aufweist. Beim Zusammenführen der beiden Handhebel wird eine Feder gespannt, deren Kraft über eine Auslöseeinrichtung auf ein Schneidmesser übertragen wird, mit dem das Lichtwellenleiterkabel somit beschleunigt durchschnitten wird. Während des Schnittes wird das Lichtwellenleiterkabel an zwei Stellen gehalten.

Der Erfindung liegt die Aufgabe zugrunde, ein Verfahren und eine Zange zum Schneiden amorpher Lichtwellenleiterkabel, insbesondere polymerer Lichtwellenleiterkabel, bereitzustellen, mit dem bzw. der ein glatter, genau rechtwinklig zur Längsachse der Seele verlaufender Schnitt reproduzierbar und mit verbesserten Oberflächeneigenschaften der Schnittfläche erfolgen kann.

Erfindungsgemäß wird dies bei dem Verfahren der eingangs beschriebenen Art dadurch erreicht, dass das Klemmbackenpaar über einen gleichsinnigen Bewegungshub relativ zu dem stillstehend angeordneten Messer bewegt und dabei geschnitten und wieder losgelassen wird, wobei das Lichtwellenleiterkabel während des Bewegungshubes zunächst über einen Spannhub in dem Klemmprofil des Klemmbackenpaares eingeklemmt, dann über eine Schnitthub mit dem Messer vollständig durchgeschnitten und schließlich über einen Öffnungshub von dem Klemmprofil losgelassen wird.

Das neue Verfahren geht bei einem Lichtwellenleiterkabel aus Seele, Innenmantel und Außenisolierung davon aus, in einem ersten separaten Verfahrensschritt das Abisolieren der Außenisolierung, also das Einkerben und Abziehen des betreffenden Abschnittes der Außenisolierung herbeizuführen, um dann das Lichtwellenleiterkabel mit dem Klemmbackenpaar nicht mehr an der Außenisolierung festzuhalten, sondern an dem insoweit freigelegten Innenmantel. Das an dem Klemmbackenpaar ausgebildete Klemmprofil ist damit grundsätzlich kleiner als im Stand der Technik bemessen und führt dazu, dass das Lichtwellenleiterkabel an dem Innenmantel, also auf kleinerem Abstand zur Längsachse des Faserbündels, genauer geklemmt gehalten werden kann. Bei einem Lichtwellenleiterkabel aus Seele und Isolierung entfällt dieser Schritt.

Das Klemmbackenpaar dient bei allen Fällen jedoch nicht nur zum Klemmen bzw. Festhalten des Lichtwellenleiterkabels an dem Innenmantel bzw. der Isolierung, sondern zugleich zur Realisierung eines Bewegungshubes des Klemmbackenpaares mit dem Lichtwellenleiterkabel relativ zu dem stillstehend angeordneten Messer. Es wird also hier das Lichtwellenleiterkabel bewegt, während das Messer stillsteht. Das Lichtwellenleiterkabel wird in einem gleichsinnigen Bewegungshub relativ zu dem Messer bewegt. Unter einem solchen gleichsinnigen Bewegungshub wird eine insbesondere geradlinige Bewegung des Lichtwellenleiterkabels ohne Richtungsumkehr verstanden. Während dieses in nur einer Richtung erfolgenden einfachen Hubes wird das Lichtwellenleiterkabel zunächst über einen Spannhub eingeklemmt und festgehalten. Erst nach Durchschreiten des Spannhubes schließt sich ein Schnitthub an, bei welchem das Lichtwellenleiterkabel durch das Messer vollständig durchgeschnitten wird. Als letzter Teil des Bewegungshubes ist ein Öffnungshub vorgesehen, in dessen Verlauf insbesondere der das Werkstück bildende Abschnitt des Lichtwellenleiterkabels losgelassen wird. Damit ist die Gefahr beseitigt, dass die Schnittfläche bei dem im Stand der Technik üblichen Doppelhub aus Vor- und Rückhub während des Rückhubes beschädigt, verschmiert oder sonst wie beeinträchtigt wird. Bei diesem Verfahren findet vorteilhaft auch ein gewisser Glätt- und Verdichtungseffekt an der Schnittfläche statt, da das Messer eine endliche Dicke besitzen muss. Der Bewegungshub kann vorteilhaft durch ein Zwangsgesperre abgesichert sein, wobei es darauf ankommt, in dem Bewegungshub, der dem Schließhub der Zange entspricht, nacheinander einen Spannhub, einen Schnitthub und einen Öffnungshub zu verwirklichen. Dies bedeutet, dass das Werkstück aus der Zange bereits dann freigegeben wird, wenn der Öffnungshub durchlaufen worden ist, ohne dass der Rückhub der Elemente der Zange stattgefunden hat. In der Regel werden der Spannhub, der Schnitthub und der Öffnungshub direkt aneinander anschließen und so insgesamt den nach vorwärts gerichteten Bewegungshub bilden. Es ist aber auch möglich, geringfügige Überschneidungen oder Sicherheitshübe zwischen Spannhub, Schnitthub und/oder Öffnungshub einzuschalten.

Besonders vorteilhaft ist es, wenn der Innenmantel bzw. die Isolierung des Lichtwellenleiterkabels von dem Klemmbackenpaar über den Bewegungshub beidseits des Messers geklemmt und geführt wird. Das Lichtwellenleiterkabel wird also nicht mehr einseitig auskragend geklemmt gehalten und in mehr oder weniger großem Abstand von der Klemmstelle nacheinander in mehreren Stationen bearbeitet, sondern es findet ein Einspannen, Klemmen und Führen des Lichtwellenleiterkabels vor und hinter der Schnittstelle statt. Dies begünstigt die gestreckte achsgenaue und rechtwinklige Anordnung des Lichtwellenleiterkabels relativ zum Messer, so dass der rechtwinklige Schnitt mit größerer Präzision und verbesserten Oberflächeneigenschaften an der Schnittstelle ausgeführt wird.

Die neue Zange, die zur Durchführung des Verfahrens geeignet ist, kennzeichnet sich erfindungsgemäß dadurch, dass das Klemmbackenpaar im Zangenkopf über einen gleichsinnigen Bewegungshub geführt und mit dem Zangenantrieb relativ zum Messer bewegbar angeordnet ist, dass das Messer im Zangenkopf während des Bewegungshubes des Klemmbackenpaares stillstehend angeordnet ist, dass der Bewegungshub aus einem Spannhub, einem Schnitthub und einem Öffnungshub zusammengesetzt ist.

Auch bei der Zange ist das Messer während des Schnittvorgangs im Zangenkopf stillgesetzt bzw. ortsfest angeordnet, was nicht ausschließt, dass z. B. bei einem Messerwechsel ein Ausschwenken oder Abschwenken des Messers relativ zum Zangenkopf erfolgt. Während des in einer Richtung durchgeführten Bewegungshubes steht jedoch das Messer still und das Lichtwellenleiterkabel wird zusammen mit dem Klemmbackenpaar bewegt. Nur indem das Klemmbackenpaar einen Weg zurücklegt ist eine einfache Möglichkeit gegeben, den Klemmhub während des Bewegungshubes bzw. über den Bewegungshub zu variieren und das Lichtwellenleiterkabel zunächst im Spannhub zu spannen und festzuhalten, im Schnitthub relativ zum Messer zu bewegen und beim Durchlaufen des Öffnungshubes wieder freizusetzen. Während des Spannhubes werden die beiden Klemmbacken des Klemmbackenpaares aneinander angenähert, so dass sie das Lichtwellenleiterkabel einklemmen und festhalten. Der Schnitthub kann mit über den Schnitthub konstantem Spanndruck, aber auch mit sich änderndem Spanndruck durchgeführt werden. Während des Öffnungshubes erfolgt ein Abbau der Klemmkraft, so dass das Lichtwellenleiterkabel freigegeben wird. Es wird auch hier lediglich ein gleichsinniger Bewegungshub zum vollständigen Durchschneiden des Lichtwellenleiterkabels eingesetzt, der in nur einer Richtung gerichtet ist und damit gleichsam nur den Vorwärtshub der Zange darstellt, während der Rückwärtshub zum Erreichen der Offenstellung der Zange ohne Einfluss auf das Werkstück ist. Während des gleichsinnigen Bewegungshubes findet keine Umkehr der Bewegungsrichtung zwischen den Klemmbacken und dem Messer statt.

Dem Bewegungshub ist ein variabler Klemmhub der Klemmbacken zueinander zugeordnet, wobei der Bewegungshub und der Klemmhub etwa rechtwinklig zueinander ausgerichtet sind. Der Klemmhub, der sich in etwa rechtwinklig zum Bewegungshub erstreckt, lässt erkennen, dass über den Bewegungshub die einzelnen Hubanteile, nämlich der Spannhub, der Schnitthub und der Öffnungshub, verwirklicht sind, in denen ggf. unterschiedliche Relativbewegungen in Richtung des Klemmhubes stattfinden.

Das Messer kann beidseitig Schneidwarten aufweisen. Die Schneidwarten können symmetrisch oder asymmetrisch ausgebildet und angeordnet sein. Das Messer weist in etwa eine Dicke von beispielsweise 0,25 mm auf. Durch zwei beidseitig vorgesehene, symmetrisch angeordnete Schneidwarten entsteht während des Schnittvorgangs ein Verfestigungs- und Glätteffekt auf die Schnittfläche, die etwa der halben Dicke des Messers entspricht. Dieser Effekt ist durchaus positiv. Er kann graduell durch eine asymmetrische Anordnung zweier Schneidwarten verstärkt oder in seiner Wirkung abgemildert werden.

Das Messer im Zangenkopf kann leicht austauschbar gelagert sein. Es ist durchaus sinnvoll, mit einem Messer nur einen oder allenfalls einige wenige Schnitte auszuführen und dann das Messer zu wechseln, um eine hohe Oberflächengüte der Schnittfläche reproduzierbar einzuhalten.

Zu beiden Seiten des Messers kann je ein insbesondere durchgehendes Klemmbackenpaar vorgesehen sein. Dies ermöglicht das beidseitige gleichzeitige Einspannen rechts und links von der Schnittstelle bzw. im unmittelbaren Anschluss an das Messer. Es versteht sich, dass bei einem durchgehenden Klemmbackenpaar nur insgesamt zwei Klemmbacken vorgesehen sind, die eine entsprechende Erstreckung quer zu der Hauptebene des Messers aufweisen. Es können aber auch nicht durchgehende Klemmbackenpaare gebildet sein, so dass insgesamt vier Klemmbacken zusammenwirken. In all diesen Fällen wird das Lichtwellenleiterkabel rechts und links von der Schnittstelle gespannt gehalten. Dies begünstigt die Geradheit des Schnittes und die Güte der Schnittfläche.

Das zu beiden Seiten durchgehende Klemmbackenpaar kann einen auf die Dicke des Messers abgestimmten Führungskanal aufweisen. Der Führungskanal ist nur geringfügig breiter als die Dicke des Messers, so dass das Messer im Führungskanal während des Schnitthubes beidseitig geführt wird. Auf diese Art und Weise lassen sich Rattermarken, Schnittrillen und ähnliche Beeinträchtigungen der Schnittfläche vermeiden. Auch ein seitliches Auswandern des Messers wird damit verlässlich verhindert.

In einer bevorzugten Ausführungsform der Zange kann die eine Klemmbacke des Klemmbackenpaars senkrecht zu dem Messer an im Zangenkopf vorgesehenen Deckplatten über den Bewegungshub geradlinig geführt sein. Dabei kann die andere Klemmbacke des Klemmbackenpaars auf der einen Klemmbacke schwenkbar gelagert sein. Zwischen der anderen Klemmbacke und den Deckplatten des Zangenkopfes kann ein Nockentrieb zur Aufbringung eines variablen Klemmhubes über den Bewegungshub vorgesehen sein. Es ist aber auch möglich, dass beide Klemmbacken schwenkbeweglich am Zangenkopf gelagert sind und ein variabler Klemmhub durch die Bewegung beider Klemmbacken zueinander aufgebracht wird. Ein Nockentrieb lässt verlässlich die Aufbringung unterschiedlicher Wege und/oder Kräfte auf die Klemmbacken eines Klemmbackenpaares zu, wobei auch die Möglichkeit besteht, während des Schnitthubes einen variablen Spanndruck zu verwirklichen. Ein solcher Spanndruck kann insbesondere über den Schnitthub abnehmend oder zunehmend gestaltet sein. Es besteht auch die Möglichkeit, dass die andere, schwenkbar gelagerte Klemmbacke des Klemmbackenpaars eine sich über den Bewegungshub erstreckende Nockenfläche aufweist, und dass im Zangenkopf eine zugehörige Druckrolle vorgesehen ist. Die Druckrolle kann frei drehbar ortsfest im Bereich des Zangenkopfes gelagert sein. Es ist auch möglich, die Druckrolle auf einem exzentrisch verstellbaren Bolzen zu lagern, um auf diese Art und Weise den Klemmhub bzw. den Spanndruck einstellbar oder nachstellbar zu gestalten. Es empfiehlt sich, die Klemmbacken in ihrer Erstreckung quer zur Haupterstreckungsrichtung des Messers nicht allzu kurz zu gestalten, damit der Innenmantel des Lichtwellenleiterkabels entsprechend lang geklemmt und gehalten ist, so dass dieser zumindest während des Schnitthubes eine sorgfältig gestreckte Lage einnimmt. Die Dicke des rechts und links des Messers überstehenden Bereiches der Klemmbacken kann einen Anschlag bilden, gegen den sich das abisolierte Ende des Außenmantels anlegt, so dass mit der Durchführung des Schnittes die Länge des vom Außenmantel abisolierten Innenmantels festgelegt ist. Diese Länge kann beispielsweise auf die Länge einer Crimpfassung abgestimmt sein.

Das erfindungsgemäße Verfahren und die zur Durchführung des Verfahrens geeignete Zange werden anhand mehrerer Ausführungsbeispiele weiter erläutert und beschrieben. Es zeigen:
- **Fig. 1**: eine Draufsicht auf die Gesamtzange in einer ersten Ausführungsform,
- **Fig. 2**: eine Draufsicht auf den Zangenkopf in einer Zwischenstellung während des Spannhubes,
- **Fig. 3**: eine Draufsicht auf den Zangenkopf in einer Zwischenstellung während des Schnitthubes,
- **Fig. 4**: eine Draufsicht auf den Zangenkopf in einer Zwischenstellung während des Öffnungshubes des Bewegungshubs,
- **Fig. 5**: ein Diagramm des Klemmhubes über den Bewegungshub,
- **Fig. 6**: eine perspektivische Darstellung des Zangenkopfes während eines Messerwechsels,
- **Fig. 7**: eine Seitenansicht einer zweiten Ausführungsform der Zange in der Offenstellung,
- **Fig. 8**: die Zange gemäß Fig. 7 in der Schließstellung,
- **Fig. 9**: die Verdeutlichung der Relativlage zwischen Messer und Lichtwellenleiterkabel bei einem Messer mit symmetrisch angeordneten Schneidwarten, und
- **Fig. 10**: eine ähnliche Darstellung wie Fig. 9, jedoch bei einem Messer mit asymmetrisch angeordneten Schneidwarten.

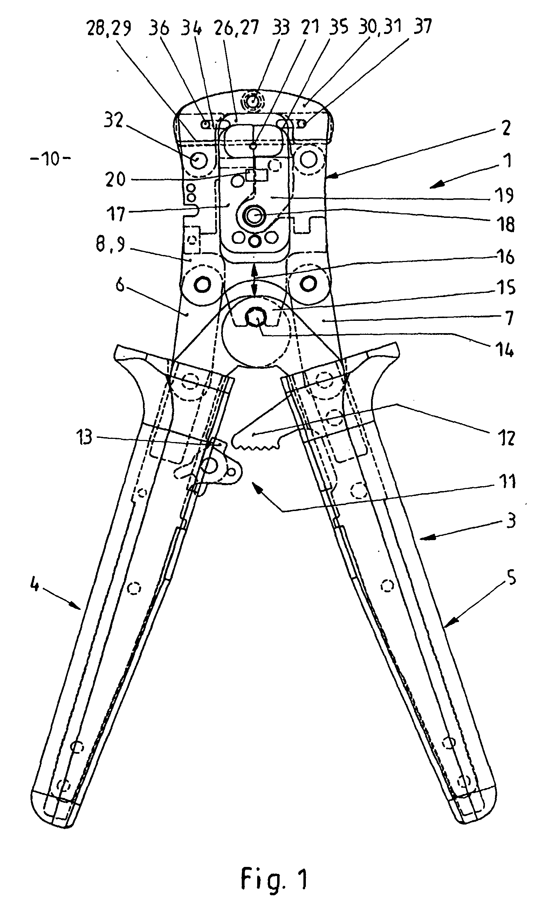

In Fig. 1 ist in Gesamtansicht eine Zange 1 dargestellt, die sich im Wesentlichen aus einem Zangenkopf 2 und einem Zangenantrieb 3 zusammensetzt. Für die Erfindung ist an sich nur die Ausbildung des Zangenkopfes 2 bedeutungsvoll. Der Zangenantrieb 3 ist gemäß Fig. 1 als ein von Hand betätigter Handantrieb mit zwei Handhebeln 4 und 5 ausgebildet. Der Zangenantrieb 3 kann jedoch beliebig gestaltet sein, beispielsweise auch als hydraulische oder pneumatische Einheit.

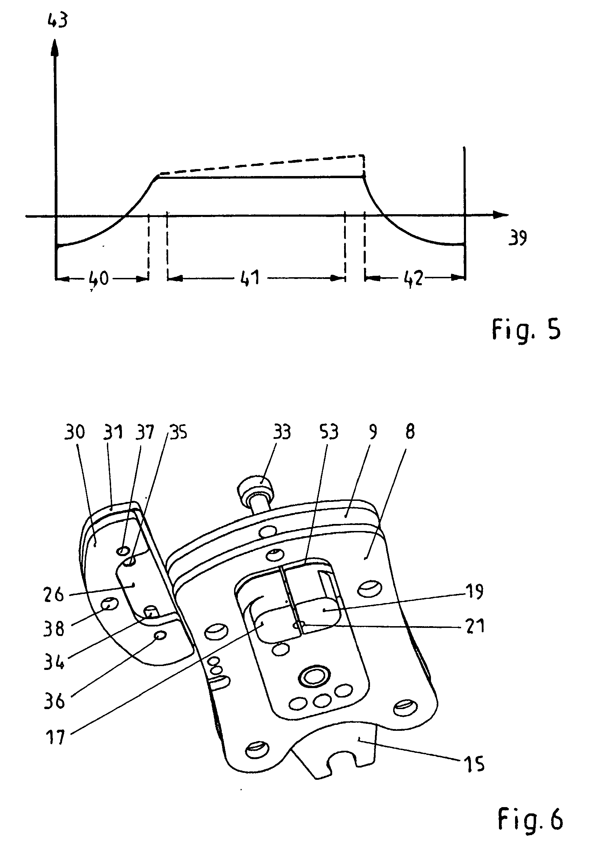

Bei manuell ausgebildetem Zangenantrieb 3 mit den beiden Handhebeln 4 und 5 ist eine an sich bekannte Bauart verwirklicht, bei der der Handhebel 4 über eine Zuglasche 6 und der Handhebel 5 in symmetrischer Anordnung über eine Zuglasche 7 mit zwei Deckplatten 8 und 9 gelenkig verbunden sind. Jede der Zuglaschen 6 und 7 besitzt an ihren beiden Enden je eine gelenkige Verbindung. Die beiden Deckplatten 8 und 9 (siehe Fig. 6) besitzen etwa rahmenartige, in der Mitte durchbrochene Gestalt übereinstimmender Formgebung und sind zu einer Mittelebene 10 gleich weit entfernt voneinander angeordnet. Die Mittelebene 10 und die Haupterstreckungsebene der Zange 1 fallen zusammen. Die beiden Deckplatten 8 und 9 sind an verschiedenen Stellen fest miteinander verbunden, was im Einzelnen nicht dargestellt ist. Zwischen den beiden Handhebeln 4 und 5 ist ein Zwangsgesperre 11 untergebracht, das im Wesentlichen ein Zahnsegment 12 und eine am anderen Handhebel 4 drehbar gelagerte Sperrklinke 13 umfasst. Aufbau und Wirkungsweise solcher Zwangsgesperre 11 sind bekannt. Sie stellen sicher, dass die Zange erst dann geöffnet werden kann, wenn die vollständige Schließbewegung der Handhebel 4 und 5 gegeneinander durchgeführt worden ist.

Die dem Zangenkopf 2 zugekehrten Enden der Handhebel 4 und 5 sind um einen Druckbolzen 14 schwenkbar aneinander angelenkt. Der Druckbolzen 14 greift an einem Schiebestück 15 an, welches geradlinig an den Deckplatten 8 und 9 geführt ist, so dass das Schiebestück je nach der Verschwenkung der Handhebel 4 und 5 zueinander nur eine geradlinige Bewegung in Richtung des Doppelpfeils 16 ausführen kann. Im Vorwärtshub, also beim Schließen der Handhebel 4 und 5 zueinander, bewegt sich das Schiebestück 15 geradlinig innerhalb der Deckplatten 8 und 9 nach oben auf das freie Ende des Zangenkopfes 2 zu, während beim Öffnen der Handhebel 4 und 5 die umgekehrte Relativbewegung zu den Deckplatten 8 und 9 stattfindet.

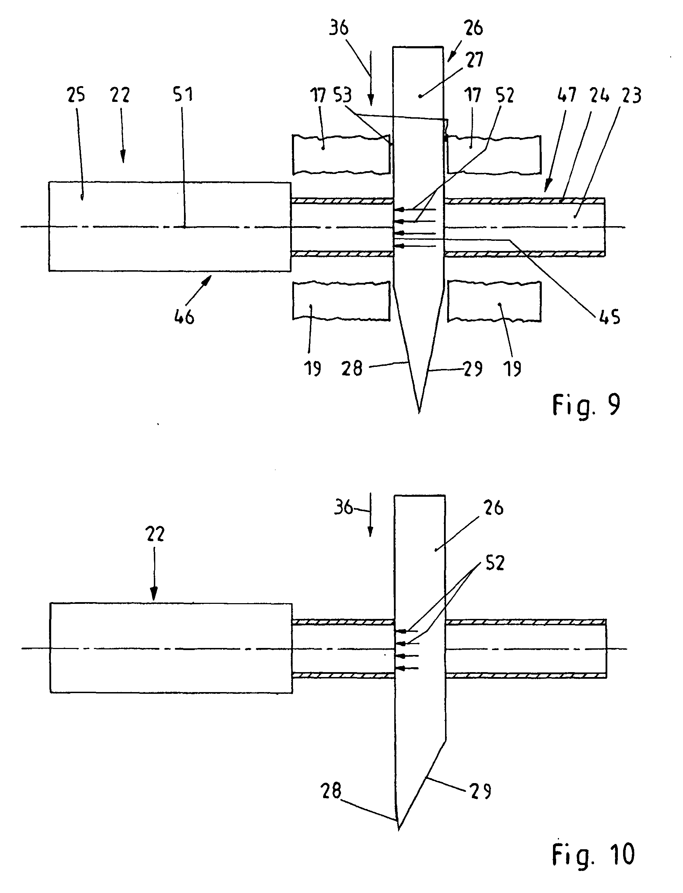

Mit dem Schiebestück 15 ist eine erste Klemmbacke 17 verbunden. Die Klemmbacke 17 ist an den Deckplatten 8 und 9 ebenfalls in Richtung des Doppelpfeils 16 geradlinig geführt, so dass sie die gleiche Bewegung wie das Schiebestück 15 ausführt. Auf der Klemmbacke 17 ist in einem Schwenklager 18 eine zweite Klemmbacke 19 schwenkbar gelagert. Die Klemmbacke 19 kann sich in einem kleinen Schwenkwinkel um das Schwenklager 18 verschwenken. Eine nicht dargestellte Feder in einem Federgehäuse 20 beaufschlagt die beiden Klemmbacken 17 und 19 im Öffnungssinne. Zwischen den beiden Klemmbacken 17 und 19 ist ein jeweils etwa halbzylindrisch ausgebildetes Klemmprofil 21 gebildet. An dieser Stelle wird das abzuschneidende Lichtwellenleiterkabel 22 (Fig. 9 und 10) eingesteckt bzw. eingeschoben. Wie insbesondere Fig. 9 erkennen lässt, weist das Lichtwellenleiterkabel 22 in seinem beispielhaft dreischichtigen Aufbau von innen nach außen eine Seele 23, einen Innenmantel 24 und eine Außenisolierung 25 auf. Die Größe des Klemmprofils 21 an den Klemmbacken 17 und 19 ist auf den Durchmesser des Innenmantels 24 abgestimmt, so dass es vor der Durchführung eines Trennschnittes erforderlich ist, die Außenisolierung 25 an der gewünschten Stelle und mit einer überschießenden Länge abzuisolieren. Dieser vorbereitende Schritt der Abisolierung kann mit einer anderen Zange oder aber auch mit nicht dargestellten Elementen an der Zange gemäß Fig. 1 durchgeführt werden.

Im Zangenkopf 2 ist im Bereich des freien Endes des Zangenkopfes 2, also in Zuordnung zu der Bewegung der beiden Klemmbacken 17 und 19 entsprechend dem Doppelpfeil 16 ein Messer 26 untergebracht. Das Messer 26 weist einen Messerrücken 27 und vorzugsweise zwei Schneidwarten 28 und 29 auf. Die Schneidwarten 28 und 29 sind am Messer 26 angeschliffen und bilden miteinander die schneidende Messerspitze bzw. Messerkante. Das Messer 26 ist auswechselbar im Zangenkopf 2 gelagert, was aus Fig. 6 erkennbar ist. Das Messer 26 ist zwischen zwei Halteplatten 30 und 31 festgelegt und flächenmäßig abgestützt. Beide Halteplatten 30 und 31 sind um einen Schwenkbolzen 32 gemeinsam schwenkbar an den Deckplatten 8 und 9 des Zangenkopfes 2 gelagert. Fig. 1 zeigt die eingeschwenkte Stellung, in der die Halteplatten 30 und 31 durch einen Steckbolzen 33 ortsfest gesichert und damit das Messer 26 ortsfest am Zangenkopf 2 untergebracht ist. Fig. 6 zeigt den teilweise gezogenen Steckbolzen 33 und das Messer 26 zwischen den Halteplatten 30 und 31. Die Halteplatte 30 kann von der Halteplatte 31 abgenommen werden, so dass das Messer 26 zugänglich wird und ausgetauscht werden kann. Das Messer 26 besitzt Langlöcher 34 und 35, mit denen es auf Zylinderstiften 36 und 37 festgelegt ist, wobei die Zylinderstifte 36 und 37 gleichzeitig zur Sicherung der Relativlage zwischen den Halteplatten 30 und 31 dienen. Eine Bohrung 38 durchsetzt die beiden Halteplatten 30 und 31 und dient dem Durchtritt des Steckbolzens 33 in der montierten verriegelten Stellung.

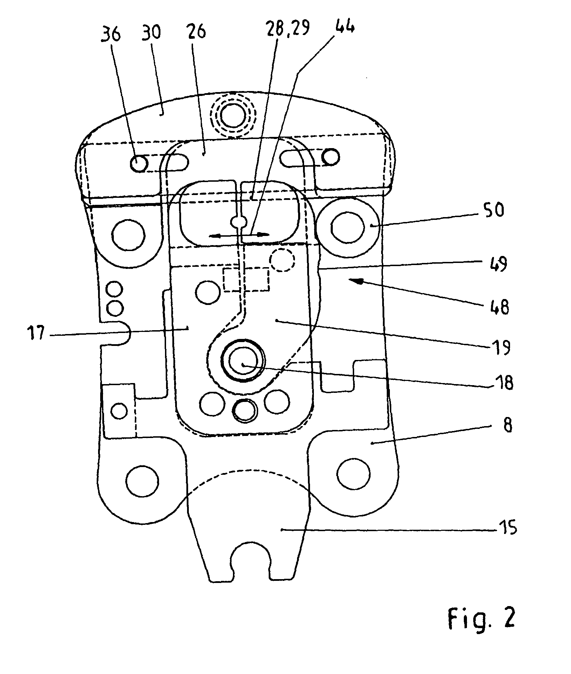

Damit ist bereits erkennbar, dass das Messer 26 während des Schneidvorganges am Zangenkopf 2 ortsfest angeordnet ist und dass das Lichtwellenleiterkabel 22 mit Hilfe der Klemmbacken 17 und 19 relativ zu dem stillstehenden Messer 26 bewegt wird. Die Klemmbacken 17 und 19 führen einen Bewegungshub 39 aus, der geradlinig in der einen Richtung des Doppelpfeils 16 abläuft und bei dem sich die Klemmbacken 17 und 19 des Klemmbackenpaares in Richtung auf das Messer 26 annähernd bewegen. Dieser Bewegungshub 39, der geradlinig und gleichsinnig in einer Richtung verläuft, weist verschiedene Bestandteile auf, nämlich einen Spannhub 40, einen Schnitthub 41 und einen Öffnungshub 42. Während des Bewegungshubes 39 führt die bewegliche Klemmbacke 19 gegenüber der fest geführten Klemmbacke 17 einen Klemmhub 43 aus. Der Klemmhub 43 erfolgt in Richtung eines Doppelpfeils 44, also rechtwinklig zu dem Doppelpfeil 16. Dies geht auch aus Fig. 5 hervor, wobei dort der Verlauf des Klemmhubes 43 über dem Verlauf des Bewegungshubes 39 dargestellt ist. Fig. 2 zeigt die Relativlage der Teile etwa zu Beginn des Spannhubes 40. Hier sind die Klemmbacken 17 und 19 noch am weitesten voneinander entfernt. Das Klemmprofil 21 ist geöffnet, so dass das Lichtwellenleiterkabel 22 mit bereichsweise entfernter Außenisolierung 25 mit dem Innenmantel 24 in das geöffnete Klemmprofil 21 einführbar ist. Dabei ist die Erstreckung der Klemmbacken 17 und 19 in dem Bereich um das Klemmprofil 21, also die Dicke der Klemmbacken 17 und 19, so abgestimmt, dass die vorgesehene Schnittstelle und die sich bildende Schnittfläche 45 des Werkstücks 46 in der festgelegten Entfernung vom Ende der Außenisolierung 25 zu liegen kommt. Das bei dem Schnitt abgetrennte Abfallstück 47 kann beliebig lang ausgebildet sein.

### Ein Schneidvorgang läuft wie folgt ab:

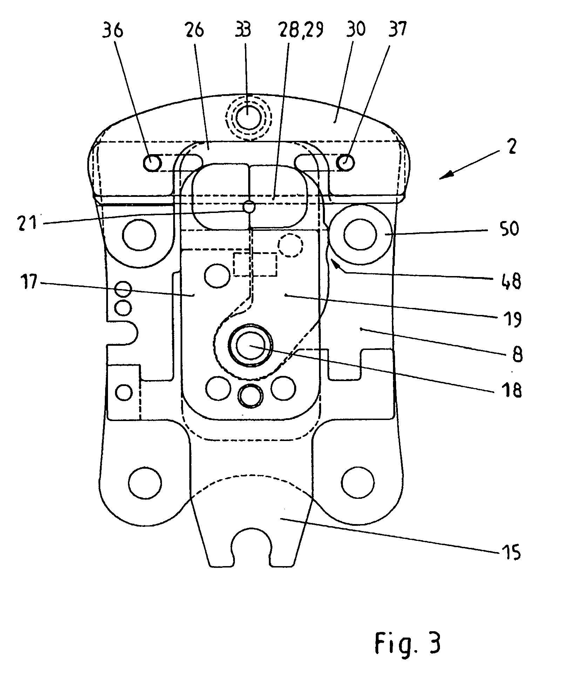

Zunächst wird gemäß Fig. 2 das abisolierte Ende eines z. B. dreischichtig aufgebauten Lichtwellenleiterkabels 22 in das geöffnete Klemmprofil 21 zwischen den Klemmbacken 17 und 19 bis zum Anschlag eingeführt. Es ist aus Fig. 2 erkennbar, dass das Klemmprofil 21 dabei in einem entsprechenden Abstand zu den Schneidwarten 28 und 29 des Messers 26 angeordnet ist. Zwischen der schwenkbeweglichen Klemmbacke 19 und den Deckplatten 8 und 9 des Zangenkopfes 2 ist ein Nockentrieb 48 verwirklicht. Der Nockentrieb 48 weist eine Nockenfläche 49 und eine damit zusammenwirkende Druckrolle 50 auf. Die Druckrolle 50 ist frei drehbar auf den Deckplatten 8 und 9 gelagert. Die Nockenfläche 49 besitzt über den Bewegungshub verschiedene Vorsprünge bzw. Rücksprünge, so dass damit der Verlauf des Klemmhubes 43 über den Bewegungshub 39 festgelegt ist. Es ist aus den Fig. 2 und 5 erkennbar, dass nach dem Einführen des Lichtwellenleiterkabels 22 in das Klemmprofil 21 zunächst der Spannhub 40 durchlaufen wird. Dabei verschwenkt die Klemmbacke 19 entgegen dem Uhrzeigersinn und das Klemmprofil 21 wird ganz oder zumindest teilweise geschlossen, so dass der Innenmantel 24 des Lichtwellenleiterkabels 22 am Ende des Spannhubes festgeklemmt ist. Am Ende des Spannhubes hat sich zwar das Klemmprofil 21 entsprechend dem Spannhub 40 nach oben bewegt, jedoch ist der Innenmantel 24 noch nicht in das Messer 26 eingedrungen. Erst bei fortgesetzter Bewegung des Bewegungshubes 39 wird der Schnitthub durchlaufen. Eine Relativlage der Teile während des Schnitthubes 41 zeigt Fig. 3. In Verbindung mit Fig. 5 ist erkennbar, dass der Spanndruck über den Schnitthub konstant (durchgezogene Linie), aber auch modifiziert, z. B. ansteigend (gestrichelte Linie) realisiert werden kann. Während des Schnitthubes tritt das Messer 26 in Wirkkontakt zu dem Lichtwellenleiterkabel 22 und durchtrennt sowohl den Innenmantel 24 wie auch die Seele 23 in einem glatten rechtwinklig zur Längsachse 51 (Fig. 9) verlaufenden Schnitt. Entsprechend der halben Dicke des Messerrückens 27 bzw. der Schneidwarte 28 tritt an der Schnittfläche 45 des Werkstücks 46 eine Verdichtungs- und Glättwirkung ein, die durch Pfeile 52 angedeutet ist. Die Verdichtungs- und Glättwirkung kann durch asymmetrische Anordnung der Schneidwarten 28 und 29 am Messer 26 variiert, beispielsweise verkleinert werden, wie dies Fig. 10 zeigt. Bei Realisierung einer einzigen Schneidwarte kann die Glättwirkung entweder maximal oder minimal gestaltet werden. In all diesen Fällen findet nur während des Bewegungshubes 39, also des Vorwärtshubes, ein Kontakt zwischen dem Messer 26 und der Schnittfläche 45 statt. Im Endbereich des Bewegungshubes 36, also während des Öffnungshubes 42 wird das Werkstück 46 und das Abfallstück 47 durch Öffnen der Klemmbacken 17 und 19 freigegeben. Das Werkstück 46 wird vor Beginn des Rückhubes in die Öffnungsstellung der Zange aus der Zange 1 entnommen.

Fig. 3 zeigt eine Zwischenstellung der Elemente des Zangenkopfes 2 während des Schnitthubes. Der Nockentrieb 48 hat die schwenkbare Klemmbacke 19 entgegen dem Uhrzeigersinn unter Schließung des Klemmprofils 21 verschwenkt, so dass das Lichtwellenleiterkabel 22 an dem Innenmantel 24 gespannt gehalten ist. Wie Fig. 9 erkennen lässt, wird der Innenmantel 24 von den Klemmbacken 17 und 19 rechts und links des Messers 26, also zu beiden Seiten geklemmt gehalten. In dieser Relativlage bewegen sich die Klemmbacken 17 und 19 auf das Messer 26 zu und durch dieses hindurch.

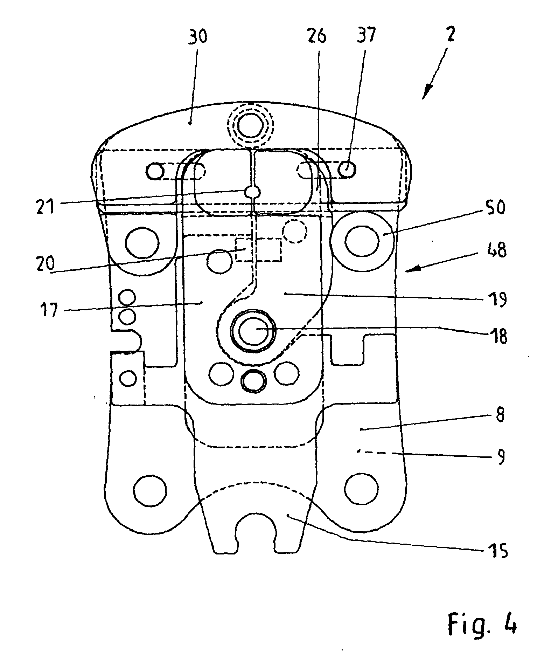

Fig. 4 zeigt eine Zwischenstellung der Elemente des Zangenkopfes 2 während des letzten Bereiches des Bewegungshubs 39, also im Öffnungshub 42. Durch eine Vertiefung in der Nockenfläche 49 schwenkt die schwenkbare Klemmbacke 19 im Uhrzeigersinn infolge der Kraft der in dem Federgehäuse 20 befindlichen Feder und das Klemmprofil 21 wird geöffnet, so dass das Werkstück 46 über den Klemmhub 43 (Fig. 5) freigegeben wird. Das Werkstück 46 wird aus dem Zangenkopf 2 herausgenommen. Anschließend wird die Endstellung des Bewegungshubes 36 erreicht, in welcher das Zwangsgesperre 11 den Rückhub freigibt.

Zweckmäßig erfolgt nach jedem Schnitt oder nach einer geringen Anzahl von Schnitten ein Messerwechsel. Hierzu wird, wie es in Fig. 6 dargestellt ist, der Steckbolzen 33 gezogen und die beiden Halteplatten 30 und 31 einschließlich des dazwischen sitzenden Messers 26 aus dem Innenraum zwischen den Deckplatten 8 und 9 herausgeschwenkt. Die vordere Halteplatte 30 wird von den Zylinderstiften 36 und 37 abgenommen. Nachfolgend wird das Messer 26 entnommen und durch ein neues Messer ersetzt. Anschließend wird die Halteplatte 30 wieder aufgefügt, die Einheit eingeschwenkt und mit dem Steckbolzen 33 gesichert.

Fig. 6 lässt auch erkennen, dass die Klemmbacken 17 und 19 zumindest im Bereich des Klemmprofils 21 eine erhebliche Quererstreckung zu der Haupterstreckungsebene des Messers 26 aufweisen. Die Klemmbacken 17 und 19 sind jeweils einstückig durchgehend ausgebildet und lediglich im Bereich des Messers 26 mit einem Führungskanal 53 versehen. Der Führungskanal 53 ist eng bemessen und auf die Dicke des Messerrückens 27 abgestimmt, so dass die Relativbewegung zwischen den Klemmbacken 17 und 19 und dem Messer 26 über den Bewegungshub 39 unter Führungsfunktion stattfinden kann.

Fig. 5 verdeutlicht den Ablauf des Bewegungshubes 39 bzw. die Zuordnung des Klemmhubes 43 zu dem Bewegungshub 39 sowie dessen Aufteilung in einen Spannhub 40, einen Schnitthub 41 und einen Öffnungshub 42. In durchgezogener Linie ist ein während des Schnitthubes sich nicht verändernder Klemmhub, also mit konstantem Spanndruck, dargestellt. Die gestrichelte Linienführung zeigt einen ansteigenden Spanndruck im Klemmprofil 21 während des Schnitthubes 41.

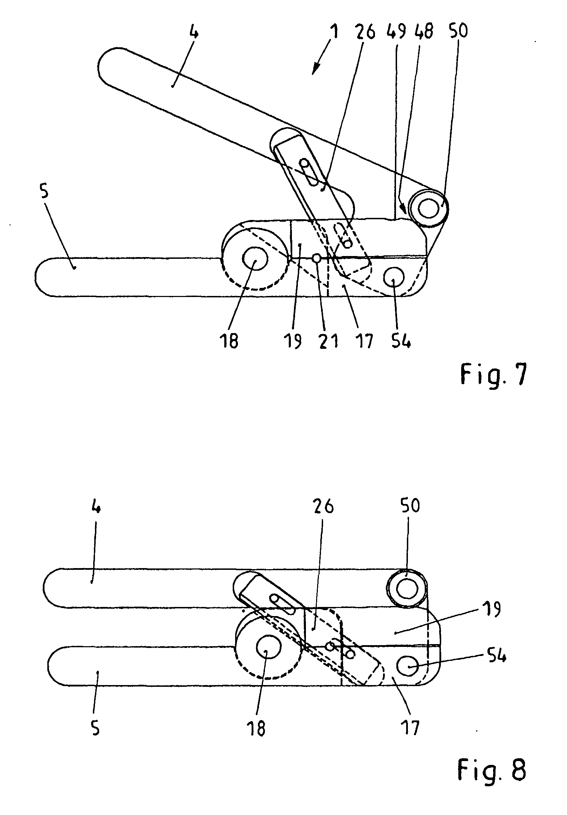

In den Fig. 7 und 8 ist eine zweite Ausführungsform der Zange 1 verdeutlicht. Auch diese Zange 1 besitzt zwei Handhebel 4, 5, die um einen gemeinsamen Gelenkbolzen 54 schwenkbar aneinander angelenkt sind. Der Handhebel 4 mag als fester Handhebel bezeichnet werden. An ihm ist ortsfest das Messer 26 gelagert. Der Handhebel 5 ist mit einem Bereich als feste Klemmbacke 17 ausgebildet. An dem Handhebel 5 bzw. der Klemmbacke 17 ist um ein Schwenklager 18 die schwenkbare Klemmbacke 19 schwenkbar gelagert. Auch hier bilden die Klemmbacken 17 und 19 ein Klemmprofil 21 zum Einführen und Festklemmen des Innenmantels 24 des Lichtwellenleiterkabels 22. Die Zange 1 weist auch einen Nockentrieb 48 auf, der von einer Nockenfläche 49 an der Klemmbacke 19 und einer Druckrolle 50 gebildet wird, die auf dem Handhebel 4 gelagert ist. Beim Schließen der Handhebel 4 und 5 läuft auch hier der Bewegungshub 36 ab, so dass die Stellung gemäß Fig. 8 erreicht wird. Aus der Zusammenschau der Fig. 7 und 8 ist auch hier erkennbar, dass der Bewegungshub 39 in den Spannhub 40, den Schnitthub 41 und den Öffnungshub 42 aufgeteilt ist.

### BEZUGSZEICHENLISTE

- 1: Zange
- 2: Zangenkopf
- 3: Zangenantrieb
- 4: Handhebel
- 5: Handhebel
- 6: Zuglasche
- 7: Zuglasche
- 8: Deckplatte
- 9: Deckplatte
- 10: Mittelebene
- 11: Zwangsgesperre
- 12: Zahnsegment
- 13: Sperrklinke
- 14: Druckbolzen
- 15: Schiebestück
- 16: Doppelpfeil
- 17: Klemmbacke
- 18: Schwenklager
- 19: Klemmbacke
- 20: Federgehäuse
- 21: Klemmprofil
- 22: Lichtwellenleiterkabel
- 23: Seele
- 24: Innenmantel
- 25: Außenisolierung
- 26: Messer
- 27: Messerrücken
- 28: Schneidwarte
- 29: Schneidwarte
- 30: Halteplatte
- 31: Halteplatte
- 32: Schwenkbolzen
- 33: Steckbolzen
- 34: Langloch
- 35: Langloch
- 36: Zylinderstift
- 37: Zylinderstift
- 38: Bohrung
- 39: Bewegungshub
- 40: Spannhub
- 41: Schnitthub
- 42: Öffnungshub
- 43: Klemmhub
- 44: Doppelpfeil
- 45: Schnittfläche
- 46: Werkstück
- 47: Abfallstück
- 48: Nockentrieb
- 49: Nockenfläche
- 50: Druckrolle
- 51: Längsachse
- 52: Pfeil
- 53: Führungskanal
- 54: Gelenkbolzen

## Patentansprüche

1. Verfahren zum Schneiden amorpher Lichtwellenleiterkabel (22), die eine Seele (23) und mindestens eine Isolierung aufweisen, indem das Lichtwellenleiterkabel in einem Klemmprofil (21) eines Klemmbackenpaares (17, 19) festgehalten und mit einem Messer (26) durchgeschnitten wird, **dadurch gekennzeichnet, dass** das Klemmbackenpaar (17, 19) über einen gleichsinnigen Bewegungshub (36) relativ zu dem stillstehend angeordneten Messer (26) bewegt und dabei geschnitten und wieder losgelassen wird, wobei das Lichtwellenleiterkabel (22) während des Bewegungshubes (39) zunächst über einen Spannhub (40) in dem Klemmprofil (21) des Klemmbackenpaares (17, 19) eingeklemmt, dann über einen Schnitthub (41) mit dem Messer (26) vollständig durchgeschnitten und schließlich über einen Öffnungshub (42) von dem Klemmprofil (21) losgelassen wird.

2. Verfahren nach Anspruch 1, **dadurch gekennzeichnet, dass** das Lichtwellenleiterkabel (22) von dem Klemmbackenpaar (17, 19) über den Bewegungshub (39) beidseits des Messers (26) geklemmt und geführt wird.

3. Zange zum Schneiden amorpher Lichtwellenleiterkabel (22), die eine Seele (23) und mindestens eine Isolierung aufweisen, mit einem Zangenantrieb (3) und einem Zangenkopf (2), in dem ein ein Klemmprofil (21) zur Aufnahme des Lichtwellenleiterkabels (22) aufweisenden Klemmbackenpaar (17, 19) und ein Messer (26) vorgesehen sind, **dadurch gekennzeichnet, dass** das Klemmbackenpaar (17, 19) im Zangenkopf (2) über einen gleichsinnigen Bewegungshub (39) geführt und mit dem Zangenantrieb (3) relativ zum Messer (26) bewegbar angeordnet ist, dass das Messer (26) im Zangenkopf (2) während des Bewegungshubes (39) des Klemmbackenpaares (17, 19) stillstehend angeordnet ist, und dass der Bewegungshub (39) aus einem Spannhub (40), einem Schnitthub (41) und einem Öffnungshub (42) zusammengesetzt ist.

4. Zange nach Anspruch 3, **dadurch gekennzeichnet, dass** dem Bewegungshub (39) ein variabler Klemmhub (43) der Klemmbacken (17, 19) zueinander zugeordnet ist, wobei der Bewegungshub (36) und der Klemmhub (43) etwa rechtwinklig zueinander ausgerichtet sind.

5. Zange nach Anspruch 3, **dadurch gekennzeichnet, dass** das Messer (26) beidseitig Schneidwarten (28, 29) aufweist.

6. Zange nach einem der Ansprüche 3 bis 5, **dadurch gekennzeichnet, dass** das Messer (26) im Zangenkopf (2) leicht austauschbar gelagert ist.

7. Zange nach einem der Ansprüche 3 bis 6, **dadurch gekennzeichnet, dass** zu beiden Seiten des Messers (26) je ein insbesondere durchgehendes Klemmbackenpaar (17, 19) vorgesehen ist.

8. Zange nach Anspruch 7, **dadurch gekennzeichnet, dass** das zu beiden Seiten durchgehende Klemmbackenpaar (17, 19) einen auf die Dicke des Messers (26) abgestimmten Führungskanal (53) aufweist.

9. Zange nach einem der Ansprüche 3 bis 8, **dadurch gekennzeichnet, dass** die eine Klemmbacke (17) des Klemmbackenpaars senkrecht zu dem Messer (26) an im Zangenkopf (2) vorgesehenen Deckplatten (8, 9) über den Bewegungshub (39) geradlinig geführt ist, dass die andere Klemmbacke (19) des Klemmbackenpaars (17, 19) auf der einen Klemmbacke (17) schwenkbar gelagert ist, und dass zwischen der anderen Klemmbacke (19) und den Deckplatten (8, 9) des Zangenkopfes (2) ein Nockentrieb (48) zur Aufbringung eines variablen Klemmhubes (43) über den Bewegungshub (39) vorgesehen ist.

10. Zange nach Anspruch 9, **dadurch gekennzeichnet, dass** die andere, schwenkbar gelagerte Klemmbacke (19) eine sich über den Bewegungshub (39) erstreckende Nockenfläche (49) aufweist, und dass im Zangenkopf (2) eine zugehörige Druckrolle (50) vorgesehen ist.

## Claims

1. Method for cutting amorphous light wave guide cables (22) including a core (23) and at least one insulating sheath, by holding the light wave guide cable in a clamping profile (21) of a pair of clamping jaws (17, 19) and cutting the cable with a knife (26), **characterized in that** the pair of clamping jaws (17, 19) are moved in a stroke of movement (39) which is straight in only one direction with respect to the knife (26) being arranged to be stationery and are released again, in which the light wave guide cable (22) during the stroke of movement (39) at first is clamped along a clamping stroke (40) in the clamping profile (21) of the pair of clamping jaws (17, 19), then is completely cut by the knife (26) along a cutting stroke (41), and finally is released by the clamping profile (21) along an opening stroke (42).

2. The method of claim 1, **characterized in that** the light wave guide cable (22) is clamped and guided by the pair of clamping jaws (17, 19) along the stroke of movement (39) on both sides of the knife (26).

3. Pliers for cutting amorphous light wave guide cables (22) including a core (23) and at least one insulating sheath, comprising a drive (3) and a pliers head (2), the pliers head including a pair of clamping jaws (17, 19) being designed and arranged to form a clamping profile (21) to receive a light wave guide cable (22) and a knife (26), **characterized in that** the pair of clamping jaws (17, 19) is guided in the pliers head (2) to move in a stroke of movement (39) which is straight in only one direction and is arranged to be moved by the drive (3) with respect to the knife (26), **in that** the knife (26) is arranged in the pliers head (2) to be stationary during the stroke of movement (39) of the pair of clamping jaws (17, 19), and **in that** the stroke of movement (39) includes a clamping stroke (40), a cutting stroke (41), and an opening stroke (42).

4. The pliers of claim 3, **characterized in that** a variable clamping stroke (43) of the clamping jaws (17, 19) is coordinated to the stroke of movement (39), and the clamping stroke (36) is directed to be approximately perpendicular with respect to the stroke of movement (39).

5. The pliers of claim 3, **characterized in that** the knife (26) at both sides includes cutting edge portions (28, 29).

6. The pliers of one of the claims 3 to 5, **characterized in that** the knife (26) is arranged in the pliers head (2) to be easily removable.

7. The pliers of one of the claims 3 to 6, **characterized in that** the pair of clamping jaws (17, 19) especially extending along both sides of the knife are arranged close to both sides of the knife (26).

8. The pliers of claim 7, **characterized in that** the clamping jaws (17, 19) being designed as one piece each are designed and arranged to include a guiding channel (53) being coordinated with the thickness of the knife (26).

9. The pliers of one of the claims 3 to 8, **characterized in that** the one clamping jaw (17) of the pair of clamping jaws is guided straight with respect to the stroke of movement (39) and perpendicular to the knife (26) by cover plates (8, 9) arranged on the pliers head (2), **in that** the other clamping jaw (19) of the pair of clamping jaws (17, 19) is pivotally arranged on the clamping jaw (17), and **in that** a cam drive (48) is located between the other clamping jaw (19) and the cover plates (8, 9) of the pliers head (2) to provide a variable clamping stroke (43) along the stroke of movement (39).

10. The pliers of claim 9, **characterized in that** the other pivotal clamping jaw (19) includes a cam surface (49) extending along the stroke of movement (39), and **in that** a coordinated pressure roller (50) is arranged on the pliers head (2).

## Revendications

1. Procédé pour découper des câbles à fibres optiques amorphes (22), qui présentent une âme (23) et au moins une isolation, du fait que le câble à fibres optiques est maintenu dans le profil de serrage (21) d'une paire de mâchoires de serrage (17, 19) et est coupé avec un couteau (26) **caractérisé en ce que** la paire de mâchoires de serrage (17, 19) est déplacée sur une course de déplacement (36) de même sens par rapport au couteau (26) disposé de façon fixe, est alors coupée et ensuite relâchée, le câble à fibres optiques (22) étant serré pendant la course de déplacement (39) d'abord sur une course de tension (40) dans le profil de serrage (21) de la paire de mâchoires de serrage (17, 19), est ensuite coupée complètement sur une course de coupe (41) avec le couteau (26) et est relâchée enfin du profil de serrage (21) sur une course d'ouverture (42).

2. Procédé selon la revendication 1, **caractérisé en ce que** le câble à fibres optiques (22) est serré et guidé par la paire de mâchoires de serrage (17, 19) sur la course de déplacement (39) de part et d'autre du couteau (26).

3. Pince pour couper des câbles à fibres optiques (22) amorphes, qui présentent une âme (23) et au moins une isolation, avec un entraînement de pince (3) et une tête de pince (2), dans laquelle sont prévus une paire de mâchoires de serrage (17, 19) présentant un profil de serrage (21) pour le logement du câble à fibres optiques (22) et un couteau (26), **caractérisée en ce que** la paire de mâchoires de serrage (17, 19) est guidée dans la tête de pince (2) sur une course de déplacement (39) de même sens et est disposée de façon mobile avec l'entraînement de pince (3) par rapport au couteau (26), de sorte que le couteau (26) soit disposé de façon immobile dans la tête de pince (2), pendant la course de déplacement (39) de la paire de mâchoires de serrage (17, 19) et que la course de déplacement (39) est composée d'une course de tension (40) d'une course de coupe (41) et d'une course d'ouverture (42).

4. Pince selon la revendication 3, **caractérisée en ce qu'**une course de serrage (43) variable des mâchoires de serrage (17, 19), l'une vers l'autre est attribuée à la course de déplacement (39), la course de déplacement (36) et la course de serrage (43) étant orientées perpendiculairement entre elles.

5. Pince selon la revendication 3, **caractérisée en ce que** le couteau (26) présente des deux côtés des biais de coupe (28, 29).

6. Pince selon l'une quelconque des revendications 3 et 5, **caractérisée en ce que** le couteau (26) est logé dans la tête de pince (2) de façon à pouvoir être remplacé facilement.

7. Pince selon l'une quelconque des revendications 3 à 6, **caractérisée en ce qu'**une paire de mâchoires de serrage (17, 19) en particulier continue est prévue sur chacun des deux côtés du couteau (26).

8. Pince selon la revendication 7, **caractérisée en ce que** la paire de mâchoires de serrage (17, 19) continue des deux côtés présente un canal de guidage (53) assorti à l'épaisseur du couteau (26).

9. Pince selon l'une quelconque des revendications 3 à 8, **caractérisée en ce que** l'une des mâchoires de serrage (17) de la paire de mâchoires de serrage est guidée de façon rectiligne perpendiculairement au couteau (26) sur des plaques de recouvrement (8, 9) prévues dans la tête de pince (2) sur la course de déplacement (39), **en ce que** l'autre mâchoire de serrage (19) de la paire de mâchoires de serrage (17, 19) est logée de façon à pouvoir basculer sur l'une des mâchoires de serrage (17), et **en ce qu'**une commande de came (48) est prévue entre l'autre mâchoire de serrage (19) et les plaques de recouvrement (8, 9) de la tête de pince (2) pour l'application d'une course de serrage (43) variable sur la course de déplacement (39).

10. Pince selon la revendication 9, **caractérisée en ce que** l'autre mâchoire de serrage (19) logée de façon basculante présente une surface de came (49) s'étendant sur la course de déplacement (39) et **en ce qu'**un galet de pression (50) spécifique est prévu dans la tête de pince (2).
